# EUROPÄISCHE PATENTSCHRIFT

(11) **EP 1 255 050 B1**
(45) Veröffentlichungstag und Bekanntmachung des Hinweises auf die Patenterteilung: **15.06.2005**
(21) Anmeldenummer: 02009698.8
(22) Anmeldetag: 27.04.2002
(51) Int. Cl.: F16B 21/02, F16B 2/18

(54) **Beschlag**
Fitting
Ferrure

(30) Priorität: 05.05.2001 DE 20107661 U
(43) Veröffentlichungstag der Anmeldung: 06.11.2002
(73) Patentinhaber: HÄFELE GmbH & Co., 72202 Nagold (DE)
(72) Erfinder: Häsler, Georg, 72202 Nagold (DE); Kuppler, Karl, 72202 Nagold (DE); Oettl, Reinhold, 71154 Nufringen (DE)
(74) Vertreter: Kohler Schmid Möbus

(56) Entgegenhaltungen:
- DE-A- 3 031 048
- US-A- 4 287 807
- US-A- 4 692 076

## Beschreibung

Die Erfindung bezieht sich auf einen Beschlag zum Verbinden von zwei Bauteilen, insbesondere Platten, mit einer im ersten Bauteil gelagerten Spannvorrichtung und einer im zweiten Bauteil festlegbaren Spreizhülse mit eingesetztem mittels der Spannvorrichtung gegenüber dieser längsverschiebbaren, die Spreizhülse durch einen Konus spreizenden Bolzen. Aus der US 4 692 076 ist bereits ein solcher Beschlag bekannt, bei welchem der Konus zentrisch zur Längsachse des Bolzens angeordnet ist. Um eine möglichst feste Verbindung zwischen den beiden Bauteilen zu erreichen, ist es erforderlich, dass die Spreizhülse mit starkem Druck an die Wände der Bohrung angepresst wird. Ein stärkerer Druck kann aber nur erreicht werden, wenn man den Durchmesser des Konus vergrößert. Über den Innendurchmesser der Bohrung hinaus ist eine solche Vergrößerung jedoch nicht möglich, da anderenfalls ein Einsetzen des Bolzens in die Bohrung ausgeschlossen ist. Beim Anziehen des Bolzens mittels einer Spannvorrichtung wird dabei die bekannte Spreizhülse in Längsrichtung ungleichmäßig auseinandergespreizt, so dass ihr unteres Ende zwar stark an die Innenwände der Bohrung angepresst wird jedoch dieser Anpressdruck in Längsrichtung gesehen dann zwangsläufig nachlässt.

Die Aufgabe der vorliegenden Erfindung ist es daher, einen Bolzen zu schaffen, bei welchem die Spreizhülse in Längsrichtung gesehen über einen längeren Bereich hinweg möglichst gleichmäßig gespreizt wird. Dies wird erfindungsgemäß dadurch erreicht, dass sich am Bolzen als Konus ein etwa kegelförmiger Ansatz befindet, dessen Längsachse seitlich versetzt zur Bolzenlängsachse angeordnet ist. Dadurch wird erreicht, dass beim Verschieben des Bolzens die Spreizhülse über einen relativ großen Längsbereich weitgehend gleichmäßig gespreizt wird, so dass sich eine sichere Verankerung derselben in der Bohrung ergibt.

Vorzugsweise verlaufen die Längsachsen des Bolzens und des kegelförmigen Ansatzes parallel zueinander. Dabei hat sich als günstigste Lösung eine Versetzung der Längsachse des kegelförmigen Absatzes in einem dem Radius des Bolzens entsprechenden Abstand von der Bolzenlängsachse erwiesen.

Um den kegelförmigen Ansatz besser dem Durchmesser der Hülse anzupassen, ist er teilweise seitlich abgeschnitten, wobei die abgeschnittenen Flächen parallel zur Bolzenlängsachse verlaufen. Der kegelförmige Ansatz kann dabei noch ein oder mehrere seitlich abstehende Absätze aufweisen, deren Oberflächen in Verlängerung der Kegelfläche verlaufen.

Zur Stabilisierung und Verstärkung des Bolzens sind nach einem weiteren Merkmal der Erfindung zwischen dem Bolzenkopf und dem kegelförmigen Ansatz ein oder mehrere parallel zur Bolzenlängsachse verlaufende Längsrippen am Bolzenschaft vorgesehen. Vorzugsweise ist der Bolzen von der Spreizhülse umspritzt. Damit diese sich jedoch besser spreizt, ist ein nach aussen offener Schlitz vorgesehen. Dieser wird zweckmäßigerweise durch mindestens eine über den Aussenumfang des kegelförmigen Ansatzes hinausstehende Rippe, welche in den Schlitz hineinragt, beim Spritzen offen gehalten.

Die Zeichnung zeigt mehrere Ausführungsbeispiele der Erfindung. Es stellen dar:
- Figur 1: die Ansicht eines Bolzens mit einem Kegel als Konus,
- Figur 2: eine Darstellung nach Figur 1 mit teilweise abgeschnittenem Kegel,
- Figur 3: eine Darstellung nach Figur 2 einer anderen Ausführungsform,
- Figur 4: eine um 90° gedrehte Darstellung nach Figur 3,
- Figur 5: den Schnitt V-V nach Figur 4,
- Figur 6: eine perspektivische Ansicht des Bolzens nach den Figuren 3 bis 5 und
- Figur 7: die Ansicht eines Bolzens nach den Figuren 3 bis 6 mit umspritzter Spreizhülse,
- Figur 8: eine Darstellung nach Figur 3 einer weiteren Ausführungsform.

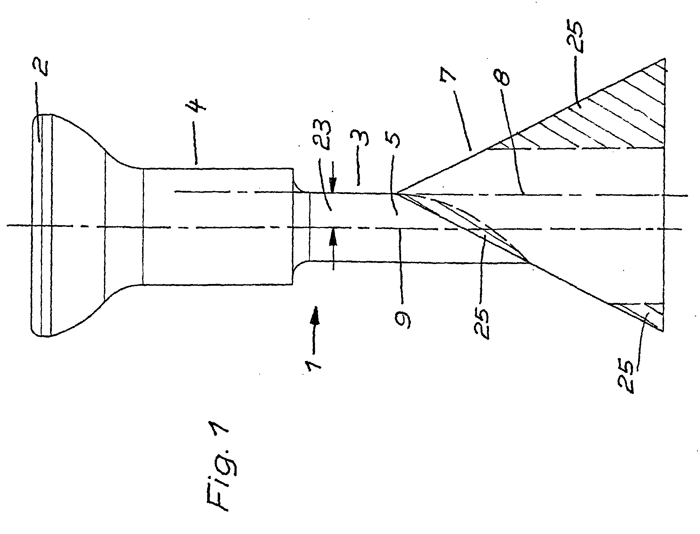

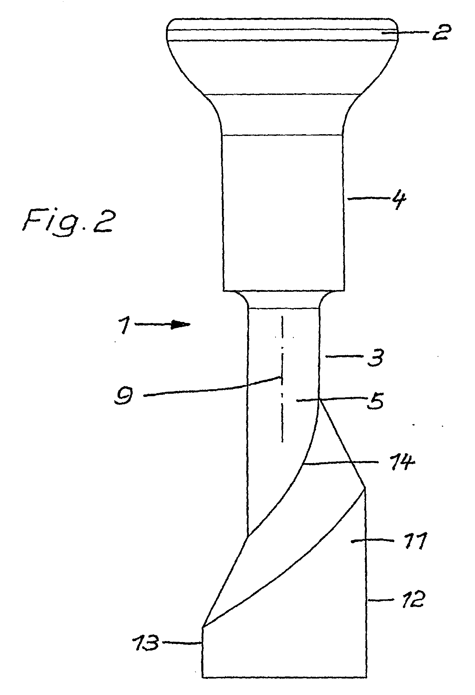

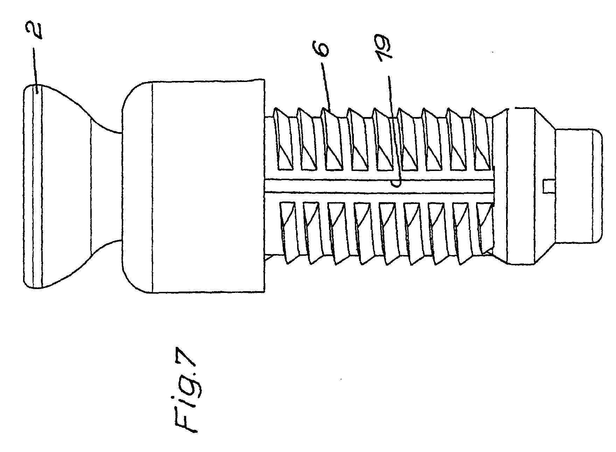

Der aus Figur 1 ersichtliche Bolzen 1 ist mit einem Kopf 2 versehen, welcher zur Verbindung zweier nicht dargestellter Bauteile mit diesem in eine ebenfalls nicht gezeigte Spannvorrichtung eingreift. An den Kopf 2 schließt sich ein Schaft 3 an, wobei das Schaftteil 5 im Durchmesser gegenüber dem kurzen Schaftteil 4 abgesetzt ist. Zum Spreizen der in Figur 7 dargestellten Spreizhülse 6 ist als Konus im Ausführungsbeispiel nach Figur 1 ein am Ende des Schaftteiles 5 angeordneter Kegel 7 vorgesehen. Dabei ist die Längsachse 8 des Kegels 7 gegenüber der Bolzenlängsachse 9 seitlich um den Radius 23 des Schaftteiles 5 versetzt angeordnet und verläuft damit in Verlängerung der äußeren Umrisslinie des Schaftteiles 5 parallel zur Bolzenlängsachse. Wenn der Bolzen 1 mit der umspritzten Hülse 6 nach Figur 7 in die Ausnehmung eines nicht dargestellten Bauteiles eingesetzt und der Bolzen 1 dann durch die nicht gezeichnete Spannvorrichtung angezogen wird, erfolgt bei der Relativverschiebung zwischen dem Bolzen 1 und der Spreizhülse 6 ein Aufspreizen derselben längs des Kegels 7. Durch die seitliche Versetzung der Längsachse desselben wird eine Verteilung der Spreizung auf dem gesamten Weg des Bolzens 1 gegenüber der Hülse 6 erreicht, damit eine einwandfreie Festlegung der Spreizhülse 6 der Bohrung des nicht dargestellten Bauteiles erreicht wird. Die schraffierten Flächen 25 zeigen den Übergang in das Ausführungsbeispiel nach Figur 2.

In Figur 2 ist der Kegel 11, um ihn besser dem Innendurchmesser der Hülse 6 anzupassen, seitlich abgeschnitten, wobei die abgeschnittenen Flächen 12 und 13 parallel zur Bolzenlängsachse 9 verlaufen. Ausserdem ist der Kegel 11 bei 14 an den Durchmesser des Schaftteiles 5 angepasst.

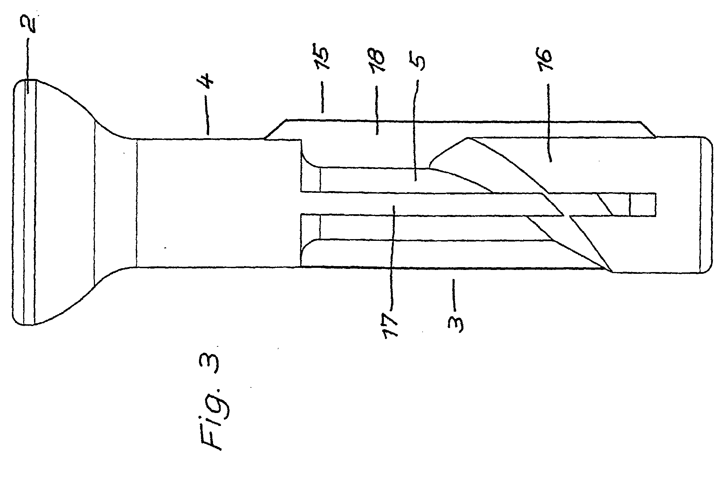

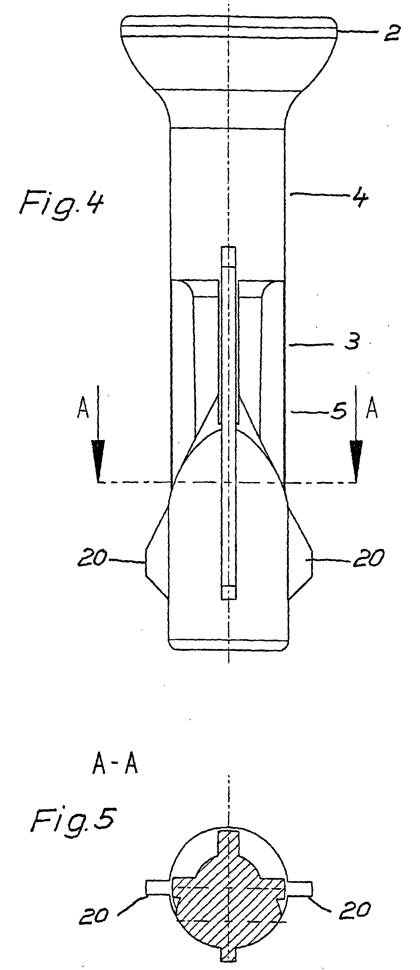

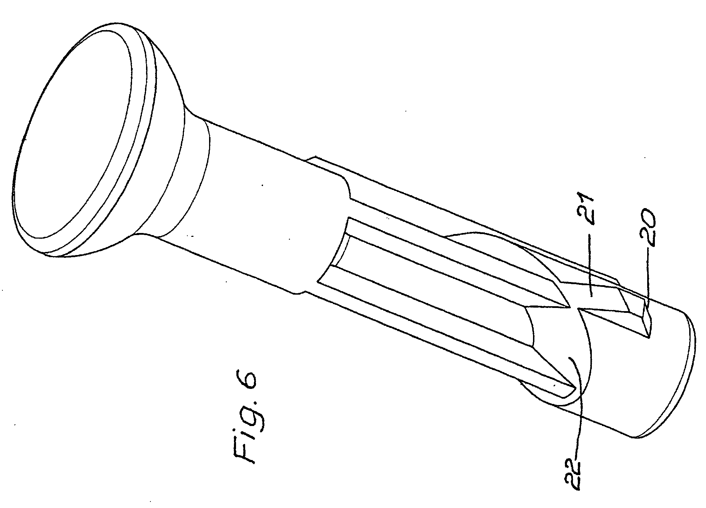

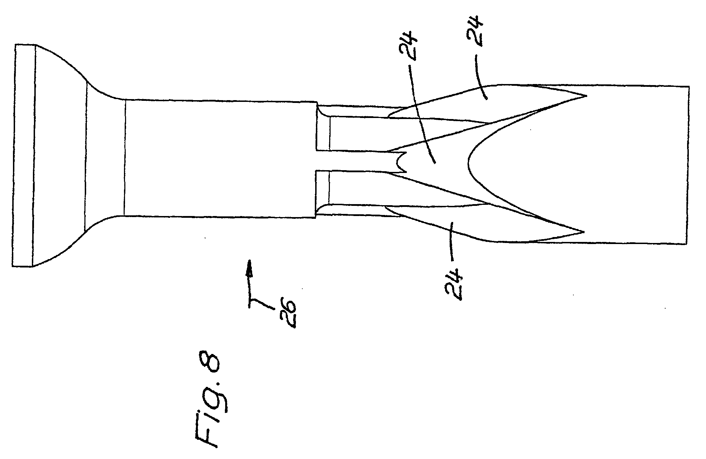

Im Ausführungsbeispiel nach Figur 3 ist der Bolzen 15 zwischen dem Schaftteil 4 und dem seitlich abgeschnittenen Kegel 16 an seinem Schaftteil 5 mit parallel zur Bolzenlängsachse 9 verlaufenden Längsrippen 17 zur Stabilisierung versehen. Dabei steht eine Rippe 18 über den Außenumfang sowohl des Schaftteiles 5 als auch des Schaftteiles 4 hinaus und ragt in einen nach außen offenen Schlitz 19 der Hülse 6 hinein. Dadurch wird erreicht, dass der Schlitz 19 beim Umspritzen des Bolzens 1, 15 frei bleibt und sich die Hülse 6 dadurch leichter spreizt. Die Figuren 4 bis 6 lassen erkennen, dass sich am kegelförmigen Ansatz 16 noch zwei seitlich abstehende Absätze 20 anschließen, deren Oberflächen 21 in Verlängerung der Kegelfläche 22 verlaufen. Wie Figur 8 zeigt sind, um die Spreizwirkung zu erhöhen, am Umfang des Bolzens 26 mehrere kegelförmige Ansätze 24 nebeneinander vorgesehen.

## Patentansprüche

1. Beschlag zum Verbinden von zwei Bauteilen, insbesondere Platten mit einer im ersten Bauteil gelagerten Spannvorrichtung und einer im zweiten Bauteil festlegbaren Spreizhülse (6) mit eingesetzten, mittels der Spannvorrichtung gegenüber dieser längsverschiebbaren, die Spreizhülse (6) durch einen Konus (7, 11, 16, 24) spreizenden Bolzen(1, 15, 26), **dadurch gekennzeichnet, dass** sich am Bolzen (1, 15, 26) als Konus ein etwa kegelförmiger Ansatz (7, 11, 16, 24) befindet, dessen Längsachse (8) seitlich versetzt zur Bolzenlängsachse (9) angeordnet ist.

2. Beschlag nach Anspruch 1, **dadurch gekennzeichnet, dass** die Längsachsen (8, 9) des Bolzens und des kegelförmigen Ansatzes parallel verlaufen.

3. Beschlag nach einem oder beiden der vorhergehenden Ansprüche, **dadurch gekennzeichnet, dass** die Längsachse (8) des kegelförmigen Ansatzes (7, 11, 16) in einem dem Radius (23) des Bolzens (1, 15) entsprechenden Abstand von der Bolzenlängsachse (9) verläuft.

4. Beschlag nach einem oder mehreren der vorhergehenden Ansprüche, **dadurch gekennzeichnet, dass** der kegelförmige Ansatz (11, 16) zumindest teilweise seitlich abgeschnitten ist, wobei die abgeschnittenen Flächen (12, 13) parallel zur Bolzenlängsachse (9) verlaufen.

5. Beschlag nach einem oder mehreren der vorhergehenden Ansprüche, **dadurch gekennzeichnet, dass** der kegelförmige Ansatz (16) ein oder mehrere seitlich abstehende Absätze (20) aufweist, deren Oberflächen (21) in Verlängerung der Kegelfläche (22) verlaufen.

6. Beschlag, dessen Bolzen mit einem Kopf versehen ist, nach einem oder mehreren der vorhergehenden Ansprüche, **dadurch gekennzeichnet, dass** zwischen dem Bolzenkopf (2) und dem kegelförmigen Ansatz (16) ein oder mehrere parallel zur Bolzenlängsachse (9) verlaufende Längsrippen (17, 18) am Bolzenschaft (5) vorgesehen sind.

7. Beschlag nach Anspruch 6, **dadurch gekennzeichnet, dass** mindestens eine Rippe (18) über den Außenumfang des kegelförmigen Ansatzes (16) hinaussteht und in einen nach aussen offenen Schlitz (19) der Spreizhülse (6) hineinragt.

8. Beschlag nach einem oder mehreren der vorhergehenden Ansprüche, **dadurch gekennzeichnet, dass** der Bolzen (1) von der Spreizhülse (6) umspritzt ist.

9. Beschlag nach einem oder mehreren der vorhergehenden Ansprüche, **dadurch gekennzeichnet, dass** am Umfang des Bolzens (26) mehrere kegelförmige Ansätze (24) nebeneinander vorgesehen sind.

## Claims

1. A fitting for connecting two components, especially panels, having a clamping device mounted in the first component and an expansible sleeve (6) that is fixable in the second component and has a inserted bolt (1, 15, 26), which bolt is longitudinally displaceable with respect to the expansible sleeve by means of the clamping device and expands the expansible sleeve (6) by means of a cone (7, 11, 16, 24), **characterised in that** on the bolt (1, 15, 26) there is provided as cone an approximately conical extension (7, 11, 16, 24), the longitudinal axis (8) of which is arranged laterally offset with respect to the bolt longitudinal axis (9).

2. A fitting according to claim 1, **characterised in that** the longitudinal axes (8, 9) of the bolt and the conical extension run parallel.

3. A fitting according to one or both of the preceding claims, **characterised in that** the longitudinal axis (8) of the conical extension (7, 11, 16) runs at a distance from the bolt longitudinal axis (9) corresponding to the radius (23) of the bolt (1, 15).

4. A fitting according to one or more of the preceding claims, **characterised in that** the conical extension (11, 16) is cut off laterally at least partially, the cut-off faces (12, 13) running parallel to the bolt longitudinal axis (9).

5. A fitting according to one or more of the preceding claims, **characterised in that** the conical extension (16) has one or more laterally protruding shoulders (20), the surfaces (21) of which run in continuation of the conical face (22).

6. A fitting, of which the bolt is provided with a head, according to one or more of the preceding claims, **characterised in that** between the bolt head (2) and the conical extension (16) one or more longitudinal ribs (17,18) running parallel to the bolt longitudinal axis (9) are provided on the bolt shank (5).

7. A fitting according to claim 6, **characterised in that** at least one rib (18) protrudes beyond the outer circumference of the conical extension (16) and projects into an outwardly open slot (19) of the expansible sleeve (6).

8. A fitting according to one or more of the preceding claims, **characterised in that** the expansible sleeve (6) is injection-moulded around the bolt (1).

9. A fitting according to one or more of the preceding claims, **characterised in that** a plurality of conical extensions (24) are provided side by side on the circumference of the bolt (26).

## Revendications

1. Ferrure pour relier deux éléments structurels, en particulier des panneaux, avec un dispositif de serrage monté dans le premier élément structurel et avec une douille expansible (6) pouvant être fixée en position dans le deuxième élément structurel et dans laquelle est inséré un boulon (1, 15, 26), qui peut être déplacé longitudinalement par rapport à elle au moyen du dispositif de serrage et qui écarte la douille expansible (6) par un cône (7, 11, 16, 24), **caractérisée en ce qu'**un appendice approximativement conique (7, 11, 16, 24) se trouve sur le boulon (1, 15, 26) comme cône, appendice dont l'axe longitudinal (8) est disposé en étant latéralement décalé par rapport à l'axe longitudinal (9) du boulon.

2. Ferrure selon la revendication 1, **caractérisée en ce que** les axes longitudinaux (8, 9) du boulon et de l'appendice conique s'étendent en parallèle.

3. Ferrure selon la revendication 1 ou 2, **caractérisée en ce que** l'axe longitudinal (8) de l'appendice conique (7, 11, 16) s'étend à une distance de l'axe longitudinal (9) du boulon qui correspond au rayon (23) du boulon (1, 15).

4. Ferrure selon une ou plusieurs des revendications précédentes, **caractérisée en ce que** l'appendice conique (11, 16) est au moins partiellement coupé latéralement, les faces coupées (12, 13) s'étendant parallèlement à l'axe longitudinal (9) du boulon.

5. Ferrure selon une ou plusieurs des revendications précédentes, **caractérisée en ce que** l'appendice conique (16) présente un ou plusieurs épaulements (20) faisant latéralement saillie, dont les surfaces (21) s'étendent dans le prolongement de la face conique (22).

6. Ferrure, dont le boulon est pourvu d'une tête, selon une ou plusieurs des revendications précédentes, **caractérisée en ce qu'**une ou plusieurs nervures longitudinales (17, 18) s'étendant parallèlement à l'axe longitudinal (9) du boulon sont prévues sur le corps de boulon (5) entre la tête de boulon (2) et l'appendice conique (16).

7. Ferrure selon la revendication 6, **caractérisée en ce qu'**au moins une nervure (18) dépasse de la circonférence extérieure de l'appendice conique (16) et pénètre dans une fente (19) de la douille expansible (6) qui est ouverte vers l'extérieur.

8. Ferrure selon une ou plusieurs des revendications précédentes, **caractérisée en ce que** le boulon (1) est enrobé de la douille expansible (6) par moulage par injection.

9. Ferrure selon une ou plusieurs des revendications précédentes, **caractérisée en ce que** plusieurs appendices coniques (24) sont prévus en juxtaposition sur la circonférence du boulon (26).
